# EUROPEAN PATENT SPECIFICATION

(11) **EP 0 400 348 B1**
(45) Date of publication and mention of the grant of the patent: **27.07.1994**
(21) Application number: 90108339.4
(22) Date of filing: 03.05.1990
(51) Int. Cl.: F27B 9/24, F27B 9/02, C21D 9/00, F27B 9/30, F27B 9/36

(54) **Temperature-maintaining furnace for metallurgic products**
Warmhalteofen für metallurgische Produkte
Four de maintien en température de produits métallurgiques

(30) Priority: 02.06.1989 IT 1251089
(43) Date of publication of application: 05.12.1990
(73) Proprietor: IRITECNA Società per l'Impiantistica Industriale e l'Assetto del Territorio per Azioni, I-16126 Genova (IT)
(72) Inventor: Bocci, Giorgio, I-16148 Genova (IT); Deplano, Stefano, I-16147 Genova (IT); Millone, Robert, I-16154 Genova (IT); Patrone, Maurizio, I-16164 Genova (IT)
(74) Representative: Porsia, Bruno

(56) References cited:
- WO-A-89/03967
- US-A- 2 638 333
- US-A- 3 374 995
- US-A- 4 247 000
- PATENT ABSTRACTS OF JAPAN, vol. 5, no. 31 (C-45)[703], 25th February 1981; & JP-A-55 158 233 (DAIDO TOKUSHUKO K.K.) 09-12-1980

## Description

A temperature-maintaining furnace for metallurgical products, more particularly for bars or the like, comprises a pathway with rollers at least partly powered, extending through a thermally insulating tunnel which consists of a succession of modules comprising each a lower panel (the furnace hearth) and an upper panel (the furnace covering or roof) which may be raised and lowered, and having an over-turned-U cross-section, the said tunnel comprising a first passive region which is merely designed to either prevent or reduce the cooling of the metallurgical products, and an active, successive region which is designed to reheat the metallurgical products through a heat-transfer by means of burners arranged in the vault of the upper panels (active upper panels) in the active region of the furnace, with their flames being directed downwards toward the metallurgical products on the roller pathway.

A temperature-maintaining furnace of this kind is known from the Applicant's former production and from the documents US-A-2.638.333 and US-A-3.374.995.

The object of the invention is to improve temperature-maintaining furnaces of this kind, so as to render the lifting and lowering of the upper panels easier, and as to simplify at the same time the supply of fuel and the feeding of combustion-supporting air to the burners for the upper panels.

For this purpose, according to the invention, each active upper panel is secured by means of supporting arms to a pivotal shaft rotatably mounted in stationary bearings, and the combustion-supporting air is fed to the burners for each active upper panel by means of an axial duct on a pivotal shaft and through a cavity in said shaft, and through supporting hollow arms for an upper panel and feeding ducts provided on said panel, while the fuel is supplied to the burners for each active upper panel by means of an axial conduit on the pivotal shaft for a panel and through union ducts and distribution ducts which are solidary with the pivotal shaft and the supporting arms for a panel, and through feeding ducts provided on said panel.

The burners in the roof or vault of the active panels in the furnace according to the invention, may be made in any suitable manner. Preferably, according to a preferred embodiment of the invention, the burners are of the jet type generating a very compact flame and intense heat transfer.

A further object of the invention is to avoid or at least reduce the atmospheric pollution in the territory surrounding the furnace. For this purpose, according to a preferred embodiment of the invention, the active region of the above-described furnace is provided with a smoke evacuation system comprising as least one outlet, and preferably two or more outlets suitably distributed over the length of the active region of the furnace and connected to a manifold smoke-discharge duct. In an embodiment of the invention, the smoke outlet or outlets are provided in the furnace hearth, under the roller pathway, between two successive rollers thereof, and are connected under the furnace to a manifold smoke discharge duct. According to a further preferred embodiment of the invention, one or more upper panels (active panels) at the active region of the temperature-maintaining furnace are provided each with a smoke inlet connected to an outlet duct which is secured to the respective active upper panel and is movable therewith between a position corresponding to the lowered position of the respective panel and wherein the outlet end of said outlet duct matches and communicates with the inlet of a stationary smoke discharge duct, and a position corresponding to the raised position of the respective panel and wherein the outlet end of the outlet duct is away from the inlet of the discharge duct.

A still further object of the invention is to construct the rollers of the roller pathway so as to make them resistant to the considerable temperature and/or temperature changes to which they are subjected, and to avoid any thermal distortion of their end shafts. For this purpose, a preferred embodiment of the invention provides a particular type of roller, constituted by a tubular body member which is closed at both ends by conical hollow heads carrying the rotation shafts of the roller and filled with heat-insulating material. Preferably, according to a further characteristic of the invention, the two heads of a roller are cooled exteriorly by water-jets, each by at least one water-jet directed into the space between two outer radial fins of the respective head.

A preferred embodiment of the invention and the advantages resulting therefrom will be apparent with more details from the following description referred to in the accompanying drawings, wherein:
Figure 1 is a diagrammatic top plan view of the active region of a temperature-maintaining furnace according to the invention;
Figure 2 is a top plan view, in enlarged scale, of one of the active upper panels of the temperature-maintaining furnace of Figure 1;
Figure 3 is a diagrammatic top plan view of a portion of the roller pathway extending through the temperature-maintaining furnace of Figures 1 and 2, with a first embodiment of the system for evacuating the smoke from the active region;
Figure 4 is an axial sectional view in an enlarged scale of one of the rollers for the roller pathway according to Figure 3;
Figure 5 is an axial sectional view, in an enlarged scale, of the pivotal axis of an active upper panel according to Figure 2;
Figure 6 is a cross sectional view of the active region of the temperature-maintaining furnace at an inlet for evacuating the smoke;
Figure 7 is a diagrammatic elevational view of a transverse row of burners provided in the vault of an active top panel according to Figure 2;
Figure 8 shows an individual burner of a transverse row of burners provided in the vault of an active upper panel, in vertical sectional view on the line VIII-VIII of Figure 7;
Figure 9 shows a modified embodiment of the smoke evacuation system, in vertical cross sectional view through the temperature-maintaining furnace at the active region thereof.

The metallurgic temperature-maintaining furnace shown in the drawings is designed, for example, to be inserted on a roller pathway of a furnace for a strip rolling mill, in the section between the cogging mill and the rotary shearing machine, upstream of the finishing mill. Obviously, however, the invention is not limited to said arrangement of the temperature-maintaining furnace, which may be used for any other purpose and which is intended mainly to maintain and/or uniformize the temperature of metallic bars B during their transfer while being worked.

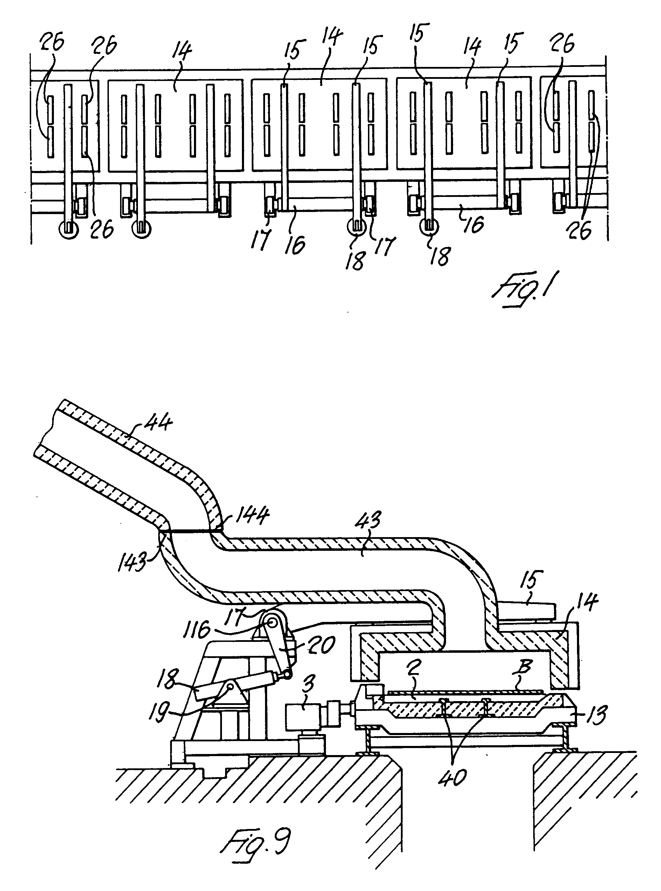

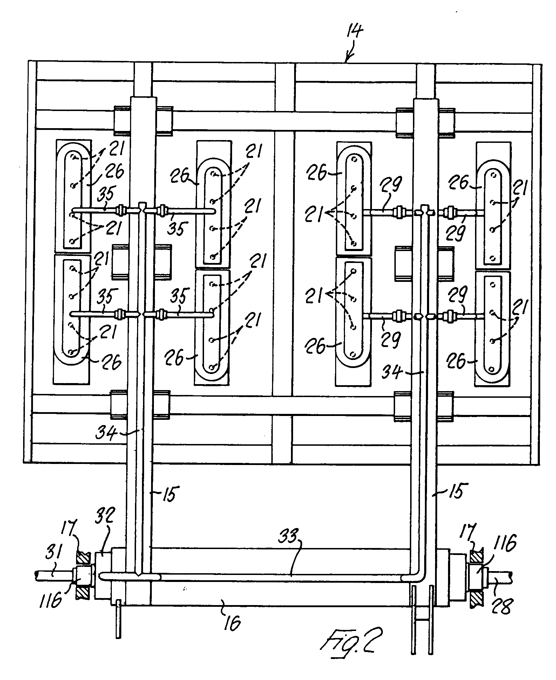

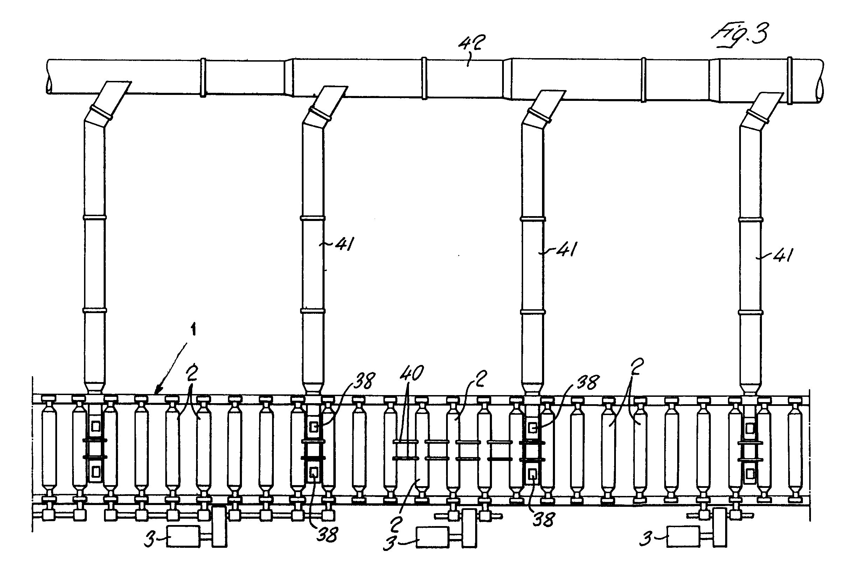

The illustrated temperature-maintaining furnace substantially comprises a thermally insulated tunnel-shaped structure enclosing a roller pathway 1 extending therethrough. The individual rollers 2 of said roller pathway are suitably powered with the aid of any actuating means 3 which is shown diagrammatically in Figures 3 and 9.

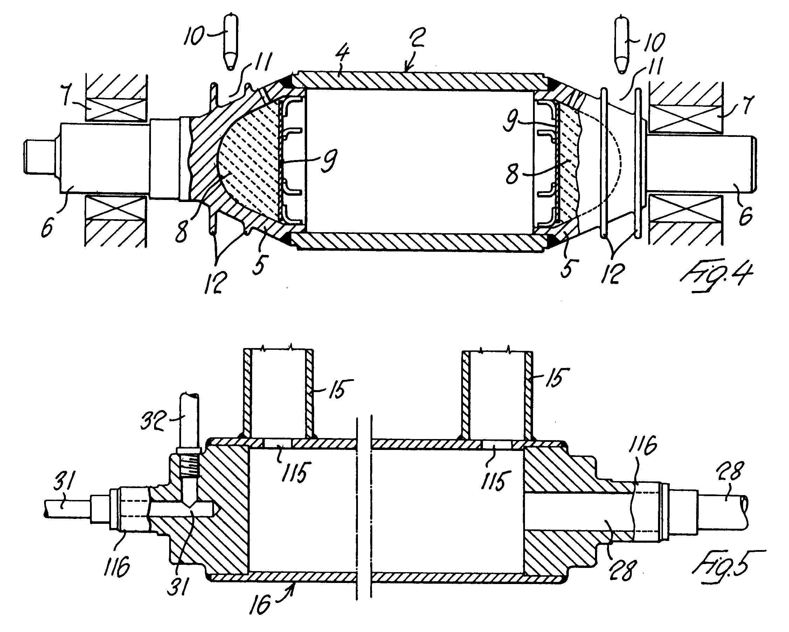

To give the rollers 3 the required resistance to the temperature of the bar B being conveyed on the roller pathway 1, and to keep the temperature of the rollers 2 substantially constant and uniform, notwithstanding each sector of the rollers 2 contacts the hot bar only temporarily and intermittently, the invention provides a preferred embodiment of rollers 2 which is shown as a non-limiting example in Figure 4. In this embodiment, each roller 2 of the roller pathway 1 comprises a tubular body 4 which is closed at both ends by conical heads 5 carrying the support and rotation shafts 6 by means of which the roller 2 is journaled in its bearings 7.

The heads 5 have a cup-shape and are filled with thermally insulating material 8. The cavity of each head 5 is closed towards the cylindrical bore of the tubular body 4 of the roller 2 by means of a disc 9. The conical heads 5, preferably, are welded to the tubular body 4 of the roller 2 and may be cooled by water from the outside, each by means of at least a spray nozzle 10 which directs a jet of cooling water into the annular space 11 which is formed between two radial fins 12 provided on the outer side of the respective head 5.

Arranged between the rollers 2 of the roller pathway 1 are stationary guides 40 extending lengthwise of the roller pathway 1 and the upper face of which is at a level just below the sliding level of the bar B, which is defined by the top sides of the rollers 2. Said stationary guides 40 prevent the front end of the bar B from stumbling between two rollers 2 of the roller pathway 1. In Figure 3, only a few of the guides 40 are shown.

The temperature-maintaining furnace along the roller pathway 1 comprises a first passive region (not shown) which is only intended to avoid or to reduce the cooling of the bar due to radiation into the environment, and a successive active region intended to reheat the bar by heat addition and provided with burners for this purpose. All the Figures of the drawings are referred to this active region of the temperature-maintaining furnace.

The active region of the temperature-maintaning furnace comprises a succession of modules each including a lower panel 13 (shown only in the modified embodiment of Figure 9) and a corresponding upper panel or covering panel 14 having an overturned U shape in cross section, or the like. These two panels enclose therebetween, similarly to a tunnel, the corresponding stretch of the roller pathway 1. The construction of the panels 13,14 will not be described in detail, because unimportant with respect to the invention. Anyway, it is worth noting that the lower panels 13 and upper panels 14 of the furnace may be made of profiles and plates and are lined with refractory material on the side facing the interior of the furnace.

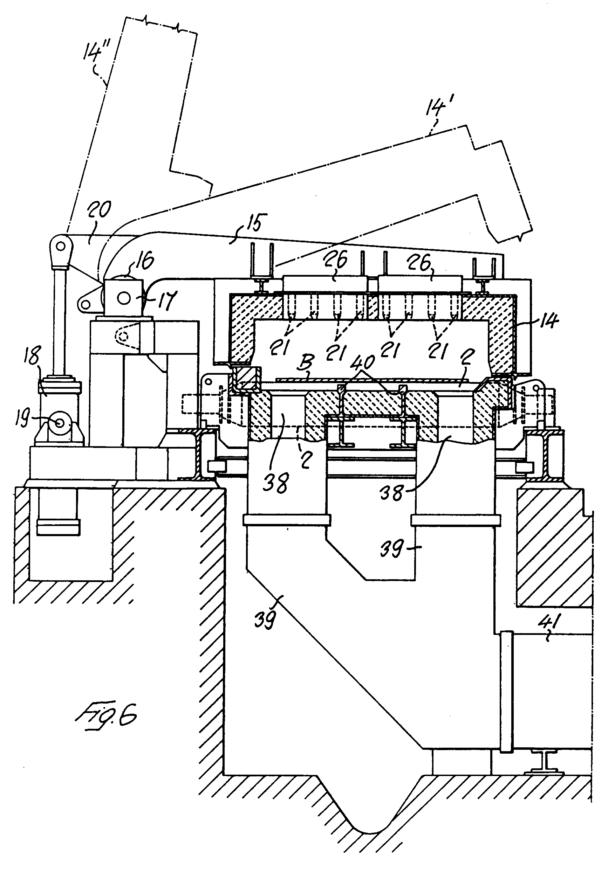

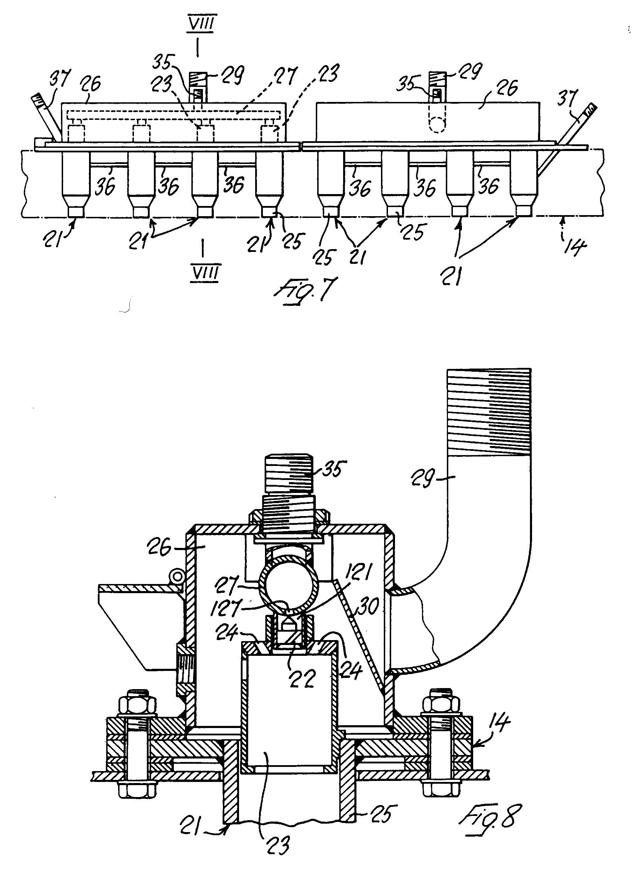

The upper panels 14 are mounted so as to be raised angularly from a lowered operative position shown with solid lines in Figures 6 to 9, to a partially opened position 14′ (for possible removal of discarded bars) and to a completely opened position 14˝ (for maintenance operations) both shown with dot-and-dash lines in Figure 6. For this purpose, each upper panel 14 is suspended from and secured to a pair of arms 15 which, in turn, are secured to a pivotal shaft 16 whose end journals 116 are rotatably mounted in corresponding bearings 17. The pivotal shaft 16 of each upper panel 14 may be pivoted limitedly by means of an associated actuating cylinder 18 which is mounted pivotably about 19 on the frame of the furnace and is articulated to a lever arm 20 of the pivotal shaft 16. Each upper panel 14 may be either raised and lowered independently of the others.

The individual modules of the passive region of the furnace may be constructed similarly to the above, the upper and lower panels of said passive region being suitably insulated.

Each upper panel 14 of the active region of the furnace comprises a plurality of individual burners 21 provided in the vault of the respective panel 14 and directed substantially vertically downwards towards the underlying roller pathway 1, i.e. towards the bar B being conveyed along said roller pathway 1. The burners 21 of each active upper panel 14 are aligned in a plurality of rows parallel to each other and oriented transversely to the roller pathway 1. The burners 21 in each transverse row of burners are staggered with respect to the burners 21 in the adjacent row or rows of burners. Moreover, each transverse row of burners 21 may extend over the entire or almost entire operative width of the furnace. In the illustrated exemplary embodiment, each active upper panel 14 exhibits four rows of burners 21, each row being constituted by eight burners 21 divided into two groups each of four burners 21. One row of burners 21 is arranged at either side of each arm 15 supporting the active upper panel 14.

The burners 21, preferably, are burners of the compact flame type affording an intense heat transfer, for example, a flame like the one of a torch. An exemplary embodiment of a burner 21 of this type is shown in Figure 8. In this burner 21, the fuel enters at 121 and proceeds through a swirling device and into the chamber 23 wherein the combustion-supporting air is also admitted through holes 24 which, preferably, are also inclined so as to generate a swirling movement. The flame issues from the nozzle 25 co-axial with the chamber 23 and communicating therewith. In the illustrated exemplary embodiment, each group of burners 21 is associated with an airbox 26 which is sealingly secured on the panel 14 and which communicates with the holes 24 for feeding the combustion-supporting air. Extending within said airbox 26, above the burners and along the row of burners, is a fuel-feeding and distributing pipe 27 communicating, through holes 127, with the fuel inlet 121 of each burner 21.

The combustion-supporting air is fed into the individual airboxes 26 associated with the groups of burners 21 of each active upper panel 14 through a conduit or duct 28 provided axially in an end portion of the pivotal shaft 16 of the respective panel 14, as shown particularly in Figures 2 and 5. Through said axial conduit 28, the combustion-supporting air enters the closed tubular body of said pivotal shaft 16 and proceeds into the airboxes 26 of the groups of burners 21 through the arms 15 supporting the panels 14, said arms 15 being of hollow construction and communicating at one end, through holes 115, with the tubular body of the pivotal shaft 16 and at the other end, through pipes or conduits 29, with the airboxes 26 of the groups of burners 21 on the active upper panels 14. The pipes 29 for the combustion-supporting air, for example, open laterally into the respective airboxes 26, and diverting baffles 30 are provided in front of the outlets thereof.

Fuel is fed to the groups of burners 21 of each active upper panel 14 through a conduit 31 provided axially in the other end portion of the pivotal shaft 16 of the respective panel 14 (Figures 2 and 5). Said conduit 31 is connected, through a radial union duct 32, to a pipe 33 extending externally along the pivotal shaft and communicates with pipes 34 extending along the arms 15 supporting the active upper panel 14. Branched from the opposite sides of said pipes 34, are transverse pipes 35 which are connected to the fuel-distributing pipes 27 for the groups of burners 21.

The chambers 23 or the nozzles 25 of the burners 21 forming a row or a group of burners, e.g. the four burners 21 associated with the same airbox 26, are connected to each other by transverse pipes 36 and only one of said burners 21 is provided with an ignition plug 37. Thus, all burners 21 of the same row or the same group may be ignited simultaneously by means of a single ignition plug 37.

The active region of the temperature-maintaining furnace is provided with a smoke evacuation system. In the exemplary embodiment shown in Figures 3 and 6, at pre-established intervals along the active region of the furnace, e.g. between the individual lower panels 13 forming the hearth of the furnace, there are provided smoke outlets each formed by two openings 38 arranged between two rollers 2 of the roller pathway 1 at both sides of the pair of guides 40. Said two openings 38 are connected through hoppers 39 to a conduit 41 extending under the furnace transversely to the roller pathway land is connected to a manifold smoke-discharge duct 42 extending parallel to the roller pathway 1. The manifold smoke-discharge duct 42 may be connected to an exhauster or to a natural draught stack.

In the modified embodiment of Figure 9, at least some of the upper panels 14 of the active region of the furnace are provided with a smoke outlet duct 43 which is integral with the upper panel 14 and has an upwardly-directed outlet 143. In the lowered position of the active upper panel 14, the outlet 143 of the smoke outlet duct 43 matches against the downwardly-directed intake 144 of a stationary smoke-discharge duct 44. When the active upper panel 14 is raised and rotates together with the duct 43 about the axis of the pivotal shaft 16, the outlet 143 of the duct 43 moves away downwards from the intake 144 of the smoke-discharge duct 44, whereby the movement of the active upper panel 14 is permitted with a very simple construction.

The particular arrangement and construction of the burners in the temperature-maintaining furnace according to the invention enables a preferential reheating transversely to the roller pathway from the sides towards the center and vice versa.

## Claims

1. A temperature-maintaining furnace for metallurgical products, more particularly for bars (B) or the like, comprising a pathway (1) with rollers (2) at least partly powered, extending through a thermally insulating tunnel which consists of a succession of modules comprising each a lower panel (13 - the furnace hearth) and an upper panel (14 - the furnace covering or roof) which may be raised and lowered, and having an overturned-U cross-section, the said tunnel comprising a first passive region which is merely designed to either prevent or reduce the cooling of the metallurgical products (B), and an active, successive region which is designed to reheat the metallurgical products (B) through a heat-transfer by means of burners (21) arranged in the vault of the upper panels (active upper panels 14) in the active region of the furnace, with their flames being directed downwards toward the metallurgical products (B) on the roller pathway (1), characterized in that each active upper panel (14) is secured by means of supporting arms (15) to a pivotal shaft (16) rotatably mounted in stationary bearings (17), and the combustion-supporting air is fed to the burners (21) for each active upper panel (14) by means of an axial duct (28) on a pivotal shaft (16) and through a cavity in said shaft, and through supporting hollow arms (15) for an upper panel and feeding ducts (29) provided on said panel, while the fuel is supplied to the burners (21) for each active upper panel (14) by means of an axial conduit (31) on the pivotal shaft (16) for a panel and through union ducts (32) and distribution ducts (33, 34) which are solidary with the pivotal shaft (16) and the supporting arms (15) for a panel (14), and through feeding ducts (35) provided on said panel (14).

2. A furnace according to claim 1, characterized in that each active upper panel (14) is provided with at least one row of a plurality of burners (21) which are aligned with each other transversely to the roller pathway (1).

3. A furnace according to claims 1 and 2, characterized in that each active upper panel (14) comprises two or more rows of burners (21), the burners in each row being staggered with respect to the burners in the adjacent row or rows.

4. A furnace according to one or more of the preceding claims, characterized in that two or more burners (21) in the same row of burners have a common airbox (26) associated therewith, communicating with a conduit (29) for feeding the combustion-supporting air, while the holes (24) for admitting the combustion-supporting air into the individual burners (21) communicate with the airbox (26).

5. A furnace according to claim 4, characterized in that two or more burners (21) in the same row of burners are accommodated in the associated airbox (26) and their holes (24) for admitting the combustion-supporting air open directly into the airbox (26).

6. A furnace according to claims 4 and 5, characterized in that the fuel inlets (121) into the burners (21) associated with an airbox (26) and arranged therein are connected to a distributing pipe (27) extending in the airbox (26) along the row of burners (21) and connected to a fuel-feeding pipe (35).

7. A furnace according to one or more of the preceding claims, characterized in that the burners (21) provided in the vault of the active upper panels (14) are of a very compact flame type.

8. A furnace according to claim 7, characterized in that each burner (21) comprises a chamber (23) whereinto fuel and combustion-supporting air are admitted, preferably co-axially and with swirling motion, said chamber (23) communicating with a co-axial nozzle (25) for exiting the flame.

9. A furnace according to claims 7 and 8, characterized in that the nozzles (25) of two or more burners (21) in the same row of burners communicate with each other through transverse pipes (36) and one of them is connected to an ignition plug (37).

10. A furnace according to one or more of the preceding claims, characterized in that the active region of the furnace is provided with a smoke-evacuation system, comprising one or more outlets (38) distributed along the length of the active region of the furnace and connected to a smoke-discharge manifold duct (42).

11. A furnace according to claim 10, characterized in that the smoke outlet or outlets (38) are arranged in the furnace hearth under the roller pathway, between two successive rollers (2) thereof and are connected under the furnace through hoppers (39) and union conduits (41) to the manifold smoke-discharge duct (42).

12. A furnace according to claim 10, characterized in that one or more active upper panels (14) are provided each with at least one smoke outlet connected to a smoke outlet duct (43) which is secured to the respective panel (14) and is movable therewith between a position corresponding to the lowered position of the respective panel (14) and wherein the outlet (143) of said outlet duct (43) matches and communicates with the intake (144) of a stationary smoke-discharge duct (44) and a position corresponding to the raised position of the respective panel (14) and wherein the outlet (143) of the outlet duct (43) moves away from the intake (144) of the stationary discharge duct (44).

13. A furnace according to one or more of the preceding claims, characterized in that the rollers (2) of the roller pathway (1) are formed each by a tubular body (4) closed at both ends by hollow conical heads (5) carrying the rotation shafts (6) of the roller and filled with thermally-insulating material (8).

14. A furnace according to claim 13, characterized in that said two heads (5) of the roller (2) are cooled exteriorly by water jets, each by at least one water jet (spray nozzle 10) directed into the space (11) between two outer radial fins (12) of the respective head.

15. A furnace according to one or more of the preceding claims, characterized by such an arrangement and construction of the burners as to obtain a heating effect transverse to the roller pathway from the sides towards the center thereof, and vice versa.

## Patentansprüche

1. Warmhalteofen für metallurgische Produkte, insbesondere für Barren, Stangen (B) oder dergleichen, mit einem Förderweg (1) mit Rollen (2), von denen wenigstens einige angetrieben sind, der sich durch einen thermisch-isolierten Tunnel erstreckt, der aus einer Aufeinanderfolge von Modulen besteht, die jeweils eine untere Platte (13 - Feuerraum) und einer oberen Platte (14 - Abdeckung oder Dach des Ofens) aufweisen, das angehoben und abgesenkt werden kann und das einen Querschnitt in Form eines umgekehrten U hat, wobei der Tunnel ein erstes, passives Gebiet aufweist, das lediglich dazu dient, das Abkühlen der metallurgischen Produkte (B) zu verhindern oder zu verringern, sowie ein aktives, sich daran anschließendes Gebiet, das dazu dient, die metallurgischen Produkte (B) wiederaufzuheizen, und zwar durch Wärmeübertragung mit Hilfe von Brennern (21), die in der Wölbung der oberen Platten (aktive obere Platten 14) angeordnet sind, und zwar im aktiven Gebiet des Ofens, wobei die Flammen der Brenner nach unten zu den metallurgischen Produkten (B) auf dem Rollengang gerichtet sind,
**dadurch gekennzeichnet,**
daß jede aktive obere Platte (14) mit Hilfe von Stützarmen (15) an einer schwenkbaren Welle (16) befestigt ist, die drehbar in stationären Lagern (17) montiert sind, und daß die die Verbrennung unterstützende Luft den Brennern (21) für jede aktive obere Platte (14) mit Hilfe einer axialen Leitung (28) an der drehbaren Welle (16) zugeführt wird sowie durch einen Hohlraum in der Welle, und durch stützende Hohlarme (15) für eine obere Platte, und ferner durch Förderleitungen (29), die an der Platte vorgesehen sind, während das Brennöl den Brenner (21) für jede aktive obere Platte (15) mit Hilfe einer axialen Leitung (21) an der sich drehenden Welle (16) für eine Platte zugeführt wird und durch gemeinsame Leitungen (32) und Verteilerleitungen (33, 34), die mit der sich drehenden Welle (16) fest verbunden sind, und durch die Stützarme (15) für eine Platte, sowie durch Förderleitungen (35), die an der Platte (14) vorgesehen sind.

2. Warmhalteofen nach Anspruch 1,
**dadurch gekennzeichnet,**
daß jede aktive obere Platte (14) mit wenigstens einer Reihe einer Vielzahl von Brennern (21) versehen ist, die miteinander quer zum Rollengang (1) ausgerichtet sind.

3. Warmhalteofen nach Anspruch 1 oder 2,
**dadurch gekennzeichnet,**
daß jede aktive obere Platte (14) zwei oder mehr Reihen von Brennern (21) aufweist, wobei die Brenner in jeder Reihe in Bezug auf die Brenner in der oder den benachbarten Reihen versetzt angeordnet sind.

4. Warmhalteofen nach einem oder mehreren der vorhergehenden Patentansprüche,
**dadurch gekennzeichnet,**
daß zwei oder mehr Brenner (21) in derselben Reihe der Brenner einen gemeinsamen Luftkasten (26) haben, der mit einer Leitung (29) für die Zufuhr der die Verbrennung unterstützenden Luft in Verbindung steht, während die Löcher (24) für die Zufuhr der die Verbrennung unterstützenden Luft in die einzelnen Brenner (21) mit dem Luftkasten (26) in Verbindung stehen.

5. Warmhalteofen nach Anspruch 4,
**dadurch gekennzeichnet,**
daß zwei oder mehr Brenner (21) in derselben Reihe der Brenner in dem zugehörigen Luftkasten (26) untergebracht sind, wobei ihre Löcher (24) für die Zufuhr der die Verbrennung unterstützenden Luft direkt in den Luftkasten (26) öffnen.

6. Warmhalteofen nach Anspruch 4 und 5,
**dadurch gekennzeichnet,**
daß die Brennöleinlässe (121) in die Brenner (21), die einem Luftkasten (26) zugehören und die darin angeordnet sind, an eine Verteilerleitung (27) angeschlossen sind, die sich im Luftkasten (26) längs der Reihe der Brenner (21) erstreckt und die an eine Zufuhrleitung (35) für das Brennöl angeschlossen sind.

7. Warmhalteofen nach einem oder mehreren der vorhergehenden Patentansprüche,
**dadurch gekennzeichnet,**
daß die in der Wölbung der aktiven oberen Platten (14) angeordneten Brenner (21) durch eine sehr kompakte Flamme ausgezeichnet sind.

8. Warmhalteofen nach Anspruch 7,
**dadurch gekennzeichnet**,
daß jeder Brenner (21) eine Kammer (23) aufweist, in die das Brennöl und die die Brennung unterstützende Luft eingegeben werden, vorzugsweise koaxial und mit einer Wirbelbewegung, wobei die Kammer (23) mit einer koaxialen Düse (25) zum Verstärken der Flamme in Verbindung steht.

9. Warmhalteofen nach den Patentansprüchen 7 und 8,
**dadurch gekennzeichnet**,
daß die Düsen (25) von zwei oder mehr Brennern (21) in derselben Reihe der Brenner miteinander über Querleitungen (36) in Verbindung stehen, und daß einer der Brenner an eine Zündvorrichtung (37) angeschlossen ist.

10. Warmhalteofen nach einem oder mehreren der vorhergehenden Patentansprüche,
**dadurch gekennzeichnet,**
daß das aktive Gebiet des Ofens mit einem Rauchabzugssystem versehen ist, das einen oder mehrere Auslässe (38) aufweist, die längs des aktiven Gebiets des Ofens verteilt sind und die mit einer Abzugsleitung (42) für den Rauch verbunden sind.

11. Warmhalteofen nach Anspruch 10,
**dadurch gekennzeichnet**,
daß der oder die Rauchauslässe (38) im Feuerraum des Ofens unter dem Rollengang angeordnet sind, und zwar zwischen zwei aufeinanderfolgenden Rollen (2) des Rollengangs und daß sie unter dem Ofen über Fülltrichter (39) und Verbindungsleitungen (41) an die Abzugsleitung (42) für den Rauch angeschlossen sind.

12. Warmhalteofen nach Anspruch 10,
**dadurch gekennzeichnet**,
daß eine oder mehrere aktive obere Platten (14) jeweils mit wenigstens einem Rauchauslaß versehen sind, der an eine Auslaßleitung (43) für den Rauch angeschlossen ist, die an der betreffenden Platte (14) befestigt ist, und die damit zusammen beweglich ist, und zwar zwischen einer Position entsprechend der abgesenkten Position der betreffenden Platte (14), wobei der Auslaß (143) der Auslaßleitung (43) mit dem Einlaß (144) einer stationären Rauchabzugsleitung (44) zusammenpaßt und damit in Verbindung steht, und andererseits zwischen einer Position entsprechend der angehobenen Position der betreffenden Platte (14), wobei der Auslaß (143) der Auslaßleitung (43) sich vom Einlaß (144) der stationären Abgabeleitung (44) hinwegbewegt.

13. Warmhalteofen nach einem oder mehreren der vorhergehenden Patentansprüche,
**dadurch gekennzeichnet**,
daß die Rollen (2) des Rollengangs (1) jeweils durch einen rohrförmigen Körper (4) ausgebildet sind, der an beiden Enden mit Hilfe von hohlen, konischen Köpfen (5) geschlossen ist, die die Drehwellen (6) der Rolle tragen und die mit thermisch-isolierendem Material gefüllt sind.

14. Warmhalteofen nach Anspruch 13,
**dadurch gekennzeichnet,**
daß zwei Köpfe (5) der Rollen (2) von außen durch Wasserstrahlen gekühlt sind, und zwar jeder von wenigstens einem Wasserstrahl (Sprühdüse 10), der in den Raum (11) zwischen zwei äußeren radialen Rippen (12) des jeweiligen Kopfes gerichtet wird.

15. Warmhalteofen nach einem oder mehreren der vorhergehenden Patentansprüche,
**dadurch gekennzeichnet**,
daß die Anordnung und Konstruktion der Brenner so getroffen ist, daß ein Erwärmungseffekt quer zum Rollengang von den Seiten zur Mitte des Rollengangs und umgekehrt erhalten wird.

## Revendications

1. Un four de maintien en température pour des produits métallurgiques, plus particulièrement peur des barres (B) ou des produits semblables, comprenant un chemin (1) équipé de rouleaux (2) au moins partiellement entraînés par un moteur, qui s'étend à travers un tunnel isolant au point de vue thermique qui consiste en une succession de modules comprenant chacun un panneau inférieur (13, la sole du four) et un panneau supérieur (14, la couverture ou le toit du four) que l'on peut soulever et abaisser, et ayant une section transversale en U renversé, ce tunnel comprenant une première région passive qui est simplement conçue pour empêcher ou réduire le refroidissement des produits métallurgiques (B), et une région active suivante qui est conçue pour réchauffer les produits métallurgiques (B) par un transfert de chaleur au moyen de brûleurs (21) disposés dans la voûte des panneaux supérieurs (panneaux supérieurs actifs 14) dans la région active du four, avec leurs flammes dirigées vers le bas en direction des produits métallurgiques (B) sur le chemin de rouleaux (1), caractérisé en ce que chaque panneau supérieur actif (14) est fixé au moyen de bras de support (15) sur un arbre pivotant (16) qui est monté de façon tournante dans des paliers fixes (17), et l'air de combustion est amené aux brûleurs (21) pour chaque panneau supérieur actif (14) au moyen d'un conduit axial (28) monté sur un arbre pivotant (16) et à travers une cavité dans cet arbre, ainsi qu'à travers des bras de support creux (15) pour un panneau supérieur et des conduits d'alimentation (29) qui sont montés sur le panneau, tandis que le combustible est amené aux brûleurs (21), pour chaque panneau supérieur actif (14), au moyen d'un conduit axial (31) monté sur l'arbre pivotant (16) pour un panneau et à travers des conduits de raccordement (32) et des conduits de distribution (33, 34) qui sont solidaires de l'arbre pivotant (16) et des bras de support (15) pour un panneau (14), et à travers des conduits d'alimentation (35) qui sont montés sur le panneau (14).

2. Un four selon la revendication 1, caractérisé en ce que chaque panneau supérieur actif (14) comporte au moins une rangée d'un ensemble de brûleurs (21) qui sont mutuellement alignés transversalement au chemin de rouleaux (1).

3. Un four selon les revendications 1 et 2, caractérisé en ce que chaque panneau supérieur actif (14) comprend deux rangées de brûleurs (21), ou plus, les brûleurs dans chaque rangée étant décalés par rapport aux brûleurs dans la rangée ou les rangées adjacentes.

4. Un four selon une ou plusieurs des revendications précédentes, caractérisé en ce que deux brûleurs (21) ou plus dans la même rangée de brûleurs sont associés à une boîte d'alimentation en air (26) commune, communiquant avec un conduit (29) pour l'alimentation en air de combustion, tandis que les trous (24) pour l'admission de l'air de combustion dans les brûleurs individuels (21) communiquent avec la boîte d'alimentation en air (26).

5. Un four selon la revendication 4, caractérisé en ce que deux brûleurs (21) ou plus dans la même rangée de brûleurs sont montés sur la boîte d'alimentation en air (26) associée, et leurs trous (24) peur l'admission de l'air de combustion s'ouvrent directement dans la boîte d'alimentation en air (26).

6. Un four selon les revendications 4 et 5, caractérisé en ce que les orifices d'entrée de combustible (121) dans les brûleurs (21) qui sont associés à une boîte d'alimentation en air (26) et sont disposés dans celle-ci, sont raccordés à un tuyau de distribution (27) qui s'étend à l'intérieur de la boîte d'alimentation en air (26) le long de la rangée de brûleurs (21) et qui est branché à un tuyau d'alimentation en combustible (35).

7. Un four selon une ou plusieurs des revendications précédentes, caractérisé en ce que les brûleurs (21) qui sent montés dans la voûte des panneaux supérieurs actifs (14) sont d'un type ayant une flamme de très petites dimensions.

8. Un four selon la revendication 7, caractérisé en ce que chaque brûleur (21) comprend une chambre (23) dans laquelle du combustible et de l'air de combustion sont admis, de préférence de manière coaxiale et avec un mouvement tourbillonnant, cette chambre (23) communiquant avec une buse coaxiale (25) pour la sortie de la flamme.

9. Un four selon les revendications 7 et 8, caractérisé en ce que les buses (25) de deux brûleurs (21) ou plus dans la même rangée de brûleurs communiquent mutuellement par l'intermédiaire de tubes transversaux (36), et l'une d'elles est en communication avec une bougie d'allumage (37).

10. Un four selon une ou plusieurs des revendications précédentes, caractérisé en ce que la région active du four comporte un système d'évacuation de fumée, comprenant un eu plusieurs orifices de sortie (38) répartis sur la longueur de la région active du four et réliés à un collecteur d'évacuation de fumée (42).

11. Un four selon la revendication 10, caractérisé en ce que le ou les orifices de sortie de fumée (38) sont disposés dans la sole du four sous le chemin de rouleaux, entre deux rouleaux successifs (2) de ce chemin, et ils sont raccordés sous le four au collecteur d'évacuation de fumée (42), par l'intermédiaire de conduits de collecte (39) et de conduits de raccordement (41).

12. Un four selon la revendication 10, caractérisé en ce qu'un ou plusieurs panneaux actifs (14) sont respectivement munis d'au moins un orifice de sortie de fumée relié à un conduit de sortie de fumée (43) qui est fixé au panneau respectif (40) et qui peut être placé avec ce dernier entre une position correspondant à une position abaissée du panneau respectif (14), et dans laquelle l'orifice de sortie (143) du conduit de sortie (43) coîncide et communique avec l'orifice d'entrée (144) d'un conduit d'évacuation de fumée fixe (44), et une position correspondant à la position soulevée du panneau respectif (14) et dans laquelle l'orifice de sortie (143) du conduit de sortie (43) est écarté de l'orifice d'entrée (144) du conduit d'évacuation fixe (44).

13. Un four selon une ou plusieurs des revendications précédentes, caractérisé en ce que chacun des rouleaux (2) du chemin de rouleaux (1) est formé par un corps tubulaire (4) fermé aux deux extrémités par des têtes coniques creuses (5) qui portent les tourillons (6) du rouleau et qui sont remplies avec une matière d'isolation thermique (8).

14. Un four selon la revendication 13, caractérisé en ce que les deux têtes (5) du rouleau (2) sont refroidies extérieurement par des jets d'eau, chaque tête étant refroidie par au moins un jet d'eau (buse de pulvérisation (10))qui est dirigé dans l'espace (11) compris entre deux ailettes radiales extérieures (12) de la tête respective.

15. Un four selon une ou plusieurs des revendications précédentes, caractérisé par une configuration et une construction des brûleurs qui permettent d'obtenir un effet de chauffage transversalement au chemin de rouleaux, à partir des côtés de celui-ci vers son centre, et inversement.
